Europäisches Patentamt

European Patent Office

Office européen des brevets

(19)

(11) **EP 1 566 990 A1**

(12) **DEMANDE DE BREVET EUROPEEN**

(43) Date de publication:
**24.08.2005 Bulletin 2005/34**

(51) Int Cl.⁷: $H05B\ 39/04$

(21) Numéro de dépôt: **05290198.0**

(22) Date de dépôt: **28.01.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **02.02.2004 FR 0400959**

(71) Demandeur: **VALEO VISION**
**93012 Bobigny Cédex (FR)**

(72) Inventeurs:
• **Flandre, Loic**
**94470 Boissy Saint Léger (FR)**
• **Richard, Stéphane**
**93700 Drancy (FR)**

(54) **Dispositif de régulation de flux lumineux des lampes halogènes**

(57) La présente invention concerne un dispositif d'éclairage et/ou de signalisation (1), tel que projecteur de véhicule, équipé d'au moins une lampe halogène, caractérisé en ce qu'il comporte un dispositif d'alimentation à découpage (39) pour alimenter la lampe halogène (11), ledit dispositif d'alimentation à découpage comprenant des moyens (41) pour réguler le flux lumineux fourni par la lampe halogène (11) et étant implanté à proximité de la lampe halogène (11) afin de minimiser des perturbations électromagnétiques et une dispersion de la tension d'alimentation aux bornes de la lampe halogène (11).

**Figure 2**

**Description**

La présente invention concerne un dispositif d'éclairage et/ou de signalisation de véhicule, comme un projecteur de véhicule, incorporant un dispositif de régulation de flux lumineux pour lampe halogène. Elle concerne aussi un système d'éclairage et/ou de signalisation de véhicule équipé d'un dispositif d'éclairage et/ou de signalisation tel que défini ci-dessus.

Dans l'état de la technique, on a déjà décrit des convertisseurs d'alimentation électrique qui, en fonction de commandes appliquées par un calculateur de bord ou directement par des interrupteurs en relation avec le tableau de bord placent une lampe halogène dans un état particulier de fonctionnement.

Cependant, depuis l'apparition des premiers convertisseurs, l'environnement électronique dans le véhicule a été quelque peu modifiée et il en résulte un certain nombre de problèmes ou de besoins non répondus auxquels la présente invention porte réponse.

On s'est aperçu que la durée de vie des lampes halogène utilisées dans le projecteur et/ou le feu de signalisation était en moyenne beaucoup plus réduite que la durée de vie indiquée par les fabricants de lampes halogène. Or, la tension de fonctionnement des alternateurs utilisés sur les véhicules a progressivement augmenté.

Par ailleurs, certaines lampes au Xénon notamment ont partagé avec les lampes halogène les mêmes faisceaux de connexion qui devaient être de faible impédance électrique pour assurer un comportement électrique correct.

Il en résulte que la tension appliquée aux bornes des lampes halogène est souvent devenue supérieure à la tension optimale permettant d'assurer la fiabilité des lampes halogène.

Par ailleurs, le flux lumineux des lampes halogène dépend étroitement de la tension qui leur est appliquée. Il résulte d'une part de l'élévation de la tension de source que le flux lumineux devient trop important, tout particulièrement pour les dispositifs de signalisation comme un feu clignotant ou un feu indicateur de circulation de jour (Day Running Time), et d'autre part de la désadaptation d'impédance due aux faisceaux qu'un phénomène d'irrégularités du flux lumineux survient, préjudiciable aussi bien au confort d'éclairage et/ou signalisation qu'à l'augmentation des inconvénients des rayonnements radiofréquences parasites (CEM).

Dans l'état de la technique, on dispose de plusieurs solutions.

Selon une première solution, on utilise un faisceau de connexion du convertisseur à la lampe qui soit fortement impédant de façon à provoquer une chute de tension par pertes. Il en résulte une réduction de la tension appliquée à la lampe halogène ce qui est bénéfique sur sa durée de vie. Néanmoins, un faisceau de connexion fortement impédant présente un surcoût matière qui est appréciable et doit être évité dans les productions en grande série.

Selon une seconde solution, on utilise une lampe halogène qui présente une durée de vie nominale plus importante que la durée de vie nominale des lampes utilisées jusqu'à présent. Une telle mesure est essentiellement atteinte en utilisant des lots de lampes halogène pour lesquelles les contraintes assurant une durée de vie plus importantes ont été augmentées. Il en résulte un surcoût matière qui est appréciable et doit être évité dans les productions en grande série.

Selon une troisième solution, on utilise un convertisseur d'alimentation pour alimenter chaque lampe halogène basé sur le schéma d'une alimentation à découpage pour laquelle la tension de sortie peut être réglée indépendamment de la tension d'alimentation. Cependant, une telle solution introduit un découpage du courant qui circule sur le faisceau d'alimentation qui relie la sortie du convertisseur à la lampe et il en résulte une perturbation électromagnétique qui accroît le risque de ne pas respecter les normes CEM en automobile.

Enfin, en commun, ces solutions présentent l'inconvénient de produire un rendement médiocre par pertes électriques notamment sur les faisceaux d'alimentation. Ensuite, la dispersion des impédances des faisceaux de connexion et la différence de leurs longueurs, selon la situation relative de l'unité de contrôle et de chaque projecteur ou feu, entraînent le risque que la tension appliquée au projecteur ou feu droite diffère de la tension appliquée au projecteur ou feu gauche.

La présente invention apporte remède à ces inconvénients de l'état de la technique. En effet, elle concerne un dispositif d'éclairage et/ou de signalisation, tel que projecteur de véhicule automobile, équipé d'au moins une lampe halogène. Selon l'invention, le dispositif d'éclairage et/ou de signalisation comporte un dispositif d'alimentation à découpage pour alimenter la lampe halogène, le dispositif d'alimentation à découpage comprenant des moyens pour réguler le flux lumineux fourni par la lampe halogène et étant implanté au plus près de la lampe halogène afin de minimiser des perturbations électromagnétiques et une dispersion de la tension d'alimentation aux bornes de la lampe halogène.

L'invention concerne aussi un système d'éclairage et/ou de signalisation de véhicule comprenant au moins un dispositif d'éclairage et/ou de signalisation tel que défini brièvement ci-dessus.

D'autres caractéristiques et avantages de la présente invention seront mieux compris à l'aide de la description et des dessins parmi lesquels : ,

- la figure 1 représente de manière schématique un projecteur selon l'invention, équipé d'un dispositif de régulation de flux lumineux pour lampe halogène ;
- la figure 2 représente le schéma bloc d'un dispositif de régulation selon l'invention ;
- les figures 3 et 4 représentent des graphes pour expliquer le fonctionnement d'un mode particulier de réalisation du dispositif de la figure 2.

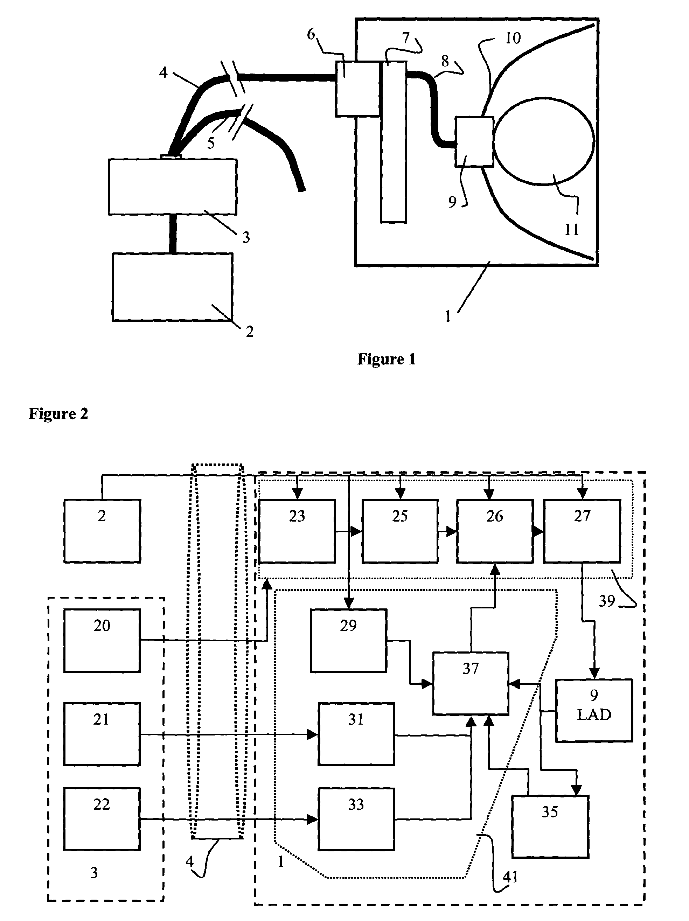

A la figure 1, on a représenté de manière schématique un projecteur selon l'invention, équipé d'un dispositif de régulation de flux lumineux pour lampe halogène. Dans le cas d'un projecteur d'éclairage de véhicule, un second projecteur latéral est disposé pour constituer un système d'éclairage et/ou signalisation de véhicule.

Le projecteur 1 comporte, enfermée dans un boîtier convenable, une lampe halogène 11 disposée dans une relation géométrique déterminée avec un réflecteur 10. La lampe 11 est montée par son culot à un connecteur solidaire du boîtier et connecté à une platine électronique 7 par un faisceau 8 d'alimentation. La platine électronique 7 est connectée à un autre faisceau d'alimentation 4 au moyen d'un connecteur 6. Un réseau de bord 2, sur lequel débite un alternateur non représenté, et sur lequel se trouve une batterie électrochimique non représentée, est connecté à une unité de contrôle 3 qui est connectée au projecteur 1 par un faisceau d'alimentation 4 et au second projecteur d'éclairage (non représenté) par un faisceau 5.

Selon l'invention, le courant circulant sur le faisceau d'alimentation 4 ne comporte pas de composante adverse au point de vue électromagnétique ou des courants pulsés de faibles valeurs. Au contraire de l'état de la technique, tout le travail permettant de réguler le flux lumineux de la lampe halogène est selon l'invention effectué de manière déportée au plus près de la lampe halogène proprement dite.

Dans un mode de réalisation, le dispositif de régulation du flux est intégré au culot de la lampe halogène.

Dans un autre mode de réalisation, le dispositif de régulation du flux est intégré au connecteur du projecteur sur lequel est monté la lampe à halogène.

Dans un autre mode de réalisation, le dispositif de régulation du flux est intégré au connecteur du projecteur sur lequel est connecté le faisceau standard d'alimentation du projecteur.

Dans un autre mode de réalisation, le dispositif de régulation du flux est intégré au connecteur du faisceau standard d'alimentation du projecteur du côté de sa connexion avec le projecteur.

Dans un autre mode de réalisation, le dispositif de régulation du flux est intégré au faisceau standard d'alimentation du projecteur en étant implanté sur le substrat isolant du faisceau, comme la gaine isolante d'un câble traditionnel, ainsi qu'on a déjà décrit une solution pour implanter un circuit électronique sur un faisceau de connexion dans le brevet EP - A - 0.719.664.

Il résulte notamment de ces dispositions que même le défaut d'adaptation d'impédance du faisceau d'alimentation, sauf le problème éventuel des pertes, est résolu puisque la grandeur électrique qui parvient à la lampe halogène elle-même peut y être régulée simplement.

A la figure 2, on a représenté le schéma bloc d'un dispositif de régulation selon l'invention. A la figure 2, les mêmes éléments portent les mêmes numéros de référence et ne seront pas plus décrits.

Le projecteur 1 a été représenté avec son faisceau externe 4 de connexion à l'unité de contrôle 3. Le réseau de bord 2 est connecté à un dispositif 39 de découpage d'un courant d'alimentation à une tension d'alimentation contrôlée.

Notamment, un tel dispositif peut être construit en appliquant l'enseignement du document EP - B1 - 0.735.801. Dans un mode particulier de réalisation, le dispositif 39 comporte un régulateur de tension 23 qui alimente alors un oscillateur à fréquence fixe 25. La sortie du circuit oscillateur 25 est connectée à une première entrée d'un circuit 26 générateur d'un signal à modulation de largeur d'impulsion PWM dont le rapport cyclique dépend d'une consigne appliquée sur une seconde entrée du circuit générateur 26 par un circuit de référence 41 qui génère une telle consigne en fonction d'une image d'une grandeur électrique représentative du flux lumineux de la lampe halogène produite par un circuit 35 pour générer une image de la tension aux bornes d'au moins une lampe halogène 9. Le flux lumineux est une caractéristique connue pour les lampes, il va de soi que toute autre donnée représentant la performance optique de la lampe/la caractérisation du rayonnement émis par celle-ci, pourrait également être utilisée.

L'onde produite par le circuit 26 est transmise à l'entrée de commande d'un circuit à transistor de découpage 27 qui est par ailleurs connecté à la source d'alimentation 2 dont la tension va être découpée en synchronisme avec l'onde PWM appliquée à la première entrée du circuit à transistor de découpage 27. Un tel circuit peut être basé ainsi qu'on l'a dit sur le brevet EP-B1-0.735.803.

La tension générée est alors appliquée à la lampe halogène 11 (à la figure 1) par son connecteur 9.

La boucle de régulation est alors constituée en utilisant un troisième circuit 35 pour générer une image d'une grandeur électrique représentative du flux lumineux d'au moins une lampe halogène.

Dans un mode de réalisation, la grandeur électrique est constituée par la mesure de la tension électrique aux bornes de la lampe halogène.

Dans un autre mode de réalisation, la grandeur électrique est constituée par la mesure du courant électrique traversant la lampe halogène. A cette fin, le circuit (non représenté) de mesure du courant électrique traversant la lampe halogène exécute une mesure de la tension aux bornes d'une résistance de shunt, non représentée, disposée entre la masse électrique et la borne correspondante de la lampe halogène.

Dans un autre mode de réalisation, la grandeur électrique est constituée par une reconstruction tabulée du flux lumineux de la lampe halogène en fonction de sa tension d'alimentation. La table enregistrée dans une mémoire (non représentée) du circuit 35 est adressée par un circuit spécial de mesure instantanée de la tension d'alimentation délivrée sur le dispositif de l'invention, au plus près de la lampe à halogène. La valeur lue dans la mémoire adressée ainsi est alors prise comme valeur de régulation par le circuit 41.

Dans un mode particulier de réalisation, le circuit de référence 41 qui génère une consigne de régulation d'une grandeur électrique comme la tension aux bornes de la lampe halogène comporte un circuit 29 générateur d'une tension de référence Vref qui est une fonction déterminée de la tension instantanée d'alimentation Val prélevée au plus près de la lampe halogène en un point notamment où les variations de tension produites par les désadaptations d'impédance des faisceaux de connexion ne jouent plus.

Le circuit de référence 41 comporte de plus un circuit générateur d'une tension continue de référence 37 qui sert à commander le circuit 26 générateur d'onde modulée en largeur d'impulsion PWM. Ce circuit applique une fonction prédéterminée f1() qui permet de calculer un niveau de tension continue de référence Vref :

$$Vref = f1(Val, Vsortie) ;$$

qui admet comme paramètres la mesure instantanée de la tension d'alimentation Val au plus près de la lampe halogène et l'image Vsortie d'une grandeur représentative du flux lumineux de la lampe halogène comme la tension mesurée aux bornes de la lampe halogène. La fonction f1() peut être réalisée sous forme programmée sur un microcontrôleur ou sur un processeur de traitement de signal ou encore sous forme micro câblée à l'aide d'un réseau logique programmable.

Dans un autre mode de réalisation, la fonction f1() peut être réalisée par des moyens électroniques analogiques, avec un circuit purement analogique, sur la base d'amplificateurs opérationnels notamment.

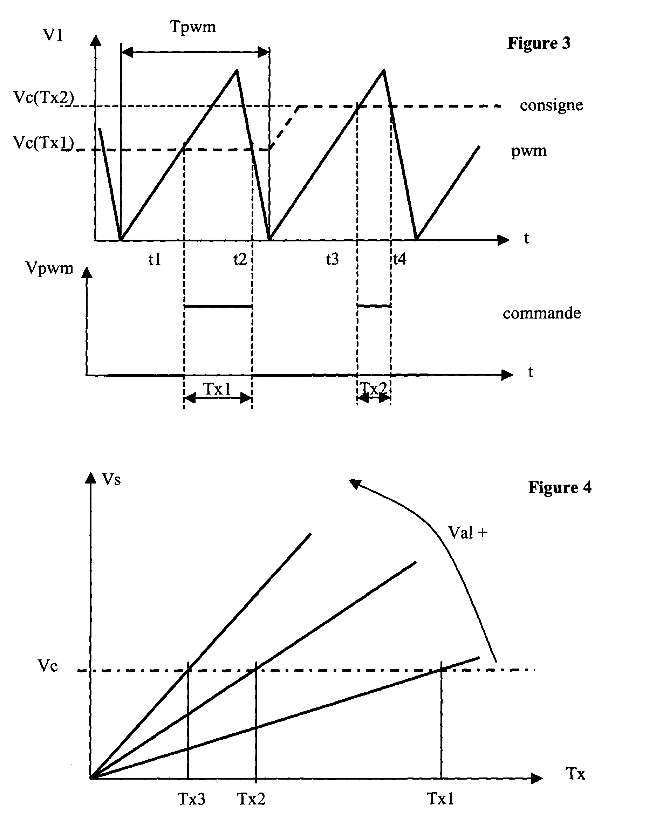

On a ainsi fermée la boucle de régulation et le dispositif de l'invention peut fonctionner en apportant les avantages annoncés. On se reporte maintenant aux figures 3 et 4 pour détailler ce fonctionnement.

A la figure 3, on a représenté :

- sur le graphe temporel supérieur : en trait continu une forme d'onde « pwm » d'une porteuse de modulation en largeur d'impulsion et en tirets une tension de consigne de largeur d'impulsion « consigne » ;
- sur le graphe temporel inférieur : le résultat de la modulation en largeur d'impulsion « commande » de la tension de consigne « consigne » sur la porteuse « pwm ». En variante, la modulation peut être une modulation de fréquence.

Le principe de la modulation de largeur d'impulsion est le suivant : Un comparateur reçoit sur une première borne d'entrée la forme d'onde « pwm » représentée à la figure 3 et sur une seconde borne d'entrée une tension de consigne de largeur d'impulsion représentée à la figure 3. La forme d'onde de sortie est représentée dans le graphe inférieur de la figure 3 et est appliqué comme tension de commande ou de référence pour le circuit de découpage à transistor 27 (Figure 2).

La forme d'onde « pwm » a été représentée sous la forme d'une onde triangulaire à deux fronts obliques. Cette onde présente la particularité d'avoir une fréquence fixe déterminée par la période Tpwm mais une phase qui varie en même temps que la consigne. Ainsi, dans le cas de la figure 3, quand la tension « consigne » passe de la valeur V(Tx1) à la valeur V(Tx2), plus élevée, la largeur temporelle de l'impulsion « commande » produite par le comparateur contenu dans le circuit 26, se réduit (graphe inférieur de la figure 3).

Il en résulte que la tension appliquée par le circuit de découpage à transistor 27 à la lampe 9 se réduit quand la consigne passe de la valeur V(Tx1) à la valeur V(Tx2), plus élevée.

Dans un autre mode de réalisation, on a remplacé le schéma de modulation en largeur d'impulsion par un schéma en modulation de fréquence dans lequel le paramètre de contrôle de la valeur instantanée de la tension appliquée est constituée par une fréquence et/ou une phase de modulation et le cas échéant par une amplitude de modulation.

A la figure 4, on a représenté un graphe sur laquelle on a représenté en trait mixte la tension optimale d'alimentation de la lampe halogène, Vc. On utilise une loi du genre Vs = Val x Tx pour réguler la tension de sortie Vs moyenne appliquée par le circuit de découpage à transistor 27 à la lampe halogène 9.

D'autres lois tenant compte d'un éventuel défaut de linéarité de la lampe halogène, selon son mode de fonctionnement notamment, ou d'un défaut de linéarité de la valeur de la tension de sortie en fonction de la commande sont programmées.

A cet effet, à la figure 2 on a représenté une unité de contrôle 3 qui est connectée par le faisceau 4 au circuit 39 de découpage d'un courant d'alimentation. L'unité de contrôle permet de commander les fonctions d'éclairage produites par le projecteur 1 grâce à un module interpréteur de commande 20 qui permet notamment de gérer le mode de fonctionnement de la lampe halogène comme un mode d'amorçage ou un mode d'entretien et d'autres fonctions qui seront déterminées plus loin.

Selon l'invention, le dispositif de régulation 7 exécute d'abord une mesure de la tension d'alimentation disponible en provenance du réseau de bord 2 grâce au circuit 29. Il reçoit enfin une image de la grandeur représentative du flux lumineux, ici la tension mesurée par le circuit 35. A l'aide du circuit 37 qui exécute la fonction préprogrammée f1() précitée, il en déduit une tension de consigne appliquée au circuit 26 dans lequel se trouve le comparateur décrit ci avant du modulateur en modulation de largeur d'impulsion. Ce dernier applique alors le découpage correct sur le circuit 27 de sorte qu'une tension régulée Vc (Figure 4) soit appliquée à la lampe.

Dans un mode de réalisation, le circuit de référence 41 comporte un circuit 31 générateur d'une tension de référence pour fonction secondaire. Le circuit 31 est commandé par un automate 21 de l'unité de contrôle 3 qui détermine une fonction secondaire. Selon les circonstances, une telle fonction secondaire s'exprime par une élévation ou par une diminution de la tension de sortie du circuit de découpage à transistor 39. Cette variation est exécutée en modifiant en conséquence le rapport cyclique Tx commandé et donc la tension de référence produite en sortie du circuit 37, par exemple selon la loi représentée à la figure 4, en augmentant ou en réduisant la tension cible Vc représentée en traits mixtes.

Dans un mode de réalisation, les fonctions secondaires assurées sont choisies parmi les fonctions « AFS » d'adaptation de l'éclairage avant du véhicule.

Dans un mode de réalisation, les fonctions d'adaptation de l'éclairage avant du véhicule sont sélectionnées parmi l'une des fonctions suivantes :

- commande du mode d'éclairage dynamique en code lors d'un virage ;
- commande du mode d'éclairage fixe en code lors d'un virage ;
- commande en mode d'éclairage en feu de ville ;
- commande en mode d'éclairage en feu d'autoroute ;
- commande en mode d'éclairage en feu surélevé ;
- commande en mode d'éclairage en feu de mauvais temps.

Dans un mode de réalisation, les fonctions secondaires assurées sont basées sur un second mode de fonctionnement de la lampe halogène, notamment pour une lampe monofilament, assuré par l'application à la lampe d'une tension, d'un courant et/ou une d'une ondulation de courant régulés et prédéterminés.

En effet, bien qu'il existe des lampes halogène à deux filaments ou plus, les lampes à un seul filament sont moins coûteuses. Le dispositif de régulation permet d'appliquer une grandeur électrique, notamment tension ou courant et forme d'onde, qui permet de produire selon les caractéristiques de la lampe de nouvelles caractéristiques optiques. Particulièrement, il est possible d'obtenir un fonctionnement impulsionnel, par exemple pour un appel de phare de réduire ou d'augmenter le flux lumineux, de modifier le diagramme de rayonnement et encore de modifier une caractéristique colorimétrique comme la « température de couleur » du flux lumineux, avec une seule lampe halogène simple.

Dans un mode de réalisation, le circuit de référence 41 qui génère une consigne de régulation d'une grandeur électrique comme la tension aux bornes de la lampe halogène comporte un circuit 33 générateur d'une tension de référence pour tenir compte de la vitesse instantanée du véhicule. A cette fin, l'unité de contrôle comporte un moyen 22 pour transmettre au dispositif de régulation une information de vitesse de déplacement du véhicule. Préférentiellement, plus la vitesse du véhicule est élevée, plus le flux lumineux est important. Comme précédemment, cette fonction supplémentaire est assurée par une augmentation de la tension cible Vc de la figure 4, que l'on obtient en réduisant la tension de référence de façon à augmenter le rapport cyclique produit par le circuit 26.

Dans un mode de réalisation, le circuit de référence 41 qui génère une consigne de régulation d'une grandeur électrique comme la tension aux bornes de la lampe halogène comporte un circuit générateur d'une tension de référence pour tenir compte de la température de la lampe.

A cette fin, le dispositif de l'invention coopère avec un capteur de température de la lampe halogène et modifie ainsi qu'il a été décrit la tension cible Vc pour limiter la variation de flux lumineux entraînée par l'échauffement de la lampe, ou au contraire par une température trop basse lors du démarrage de la lampe. Le capteur de température est dans un autre mode de réalisation remplacé par un moyen d'estimation de la température fondée sur la mesure d'un paramètre électrique comme une variation de courant traversant la lampe ou la mesure de la température ambiante du projecteur.

Dans un mode de réalisation, le circuit de référence 41 qui génère une consigne de régulation d'une grandeur électrique comme la tension aux bornes de la lampe halogène comporte un circuit générateur d'une tension de référence pour tenir compte du degré de vieillissement de la lampe.

A cette fin, le circuit 41 coopère avec une première mémoire enregistrant le cumul des durées d'utilisation de la lampe de sorte qu'une seconde mémoire contenant une table des tensions cible produisant un flux lumineux optimal en fonction du degré de vieillissement de la lampe puisse être lue. La valeur lue sur la seconde mémoire est alors appliquée comme valeur centrale sur le circuit générateur de tension de référence 37 qui peut cependant être modifiée notamment lors de variations de la mesure de la tension d'alimentation ou d'autres fonctions précitées.

Dans un mode de réalisation, le circuit de référence comporte un circuit 37 pour générer une tension de référence servant de consigne pour le circuit 26 générateur d'un signal à modulation de largeur d'impulsion PWM qui exécute une fonction f1(), de la forme Vref = f1(Val, Vsortie), dépendant des paramètres produits par au moins l'un des circuits comme le circuit 29 de mesure de la tension d'alimentation Val, le circuit 31 générateur d'une tension de référence pour fonction secondaire, le circuit 33 générateur d'une tension de référence pour tenir compte de la vitesse instantanée du véhicule, le circuit générateur d'une tension de référence pour tenir compte de la température de la lampe, le circuit générateur d'une tension de référence pour tenir compte du degré de vieillissement de la lampe.

Dans un mode de réalisation, l'onde produite par le circuit 26 est transmise à l'entrée de commande d'un circuit à transistor de découpage 27 qui est par ailleurs connecté à la source d'alimentation 2) dont la tension va être découpée en synchronisme avec l'onde PWM appliquée à la première entrée du circuit à transistor de découpage 27.

L'invention s'applique bien entendu à un système de signalisation dans lequel la lampe halogène est montée dans un feu de signalisation. Les mêmes éléments que ceux des figures 2 à 4 sont alors utilisés de manière similaire.

L'invention concerne donc un système d'éclairage et/ou de signalisation de véhicule, incorporant un dispositif de régulation tel qu'il est défini ci-dessus. Le système comprend un dispositif de régulation associé à chaque projecteur ou feu.

Un tel système d'éclairage et/ou de signalisation comporte des moyens pour activer une seconde fonction d'éclairage et/ou de signalisation pour une même lampe halogène, notamment de type monofilament.

## Revendications

1. Dispositif d'éclairage et/ou de signalisation (1), tel que projecteur de véhicule, équipé d'au moins une lampe halogène, **caractérisé en ce qu'**il comporte un dispositif d'alimentation à découpage (39) pour alimenter la lampe halogène (11), ledit dispositif d'alimentation à découpage comprenant des moyens (41) pour réguler le flux lumineux fourni par la lampe halogène (11) et étant implanté à proximité de la lampe halogène (11) afin de minimiser des perturbations électromagnétiques et une dispersion de la tension d'alimentation aux bornes de la lampe halogène (11).

2. Dispositif selon la revendication 1, **caractérisé en ce que** ledit dispositif d'alimentation à découpage est intégré au culot de la lampe halogène (11).

3. Dispositif selon la revendication 1, **caractérisé en ce que** ledit dispositif d'alimentation à découpage est intégré dans un connecteur (9) du dispositif d'éclairage et/ou de signalisation (1) sur lequel est montée la lampe halogène.

4. Dispositif selon la revendication 1, **caractérisé en ce que** ledit dispositif d'alimentation à découpage est intégré dans un connecteur (6) du dispositif d'éclairage et/ou de signalisation (1) sur lequel est connecté un faisceau standard d'alimentation du dispositif d'éclairage et/ou de signalisation (1).

5. Dispositif selon la revendication 1, **caractérisé en ce que** ledit dispositif d'éclairage et/ou de signalisation est intégré à un connecteur d'un faisceau standard d'alimentation (4) du dispositif d'éclairage et/ou de signalisation (1) du côté de sa connexion (6) avec le dispositif d'éclairage et/ou de signalisation (1).

6. Dispositif selon la revendication 1, **caractérisé en ce que** le dispositif d'éclairage et/ou de signalisation est intégré à un faisceau standard d'alimentation du dispositif d'éclairage et/ou de signalisation (1) en étant implanté sur une gaine isolante du faisceau (4).

7. Dispositif selon la revendication 1 ou l'une quelconque des revendications 2 à 6, **caractérisé en ce que** le dispositif d'alimentation à découpage (39) comporte un régulateur de tension (23) qui alimente un oscillateur à fréquence fixe (25), connectée à une première entrée d'un circuit (26) générateur d'un signal à modulation de largeur d'impulsion PWM dont le rapport cyclique dépend d'une consigne appliquée sur une seconde entrée du circuit générateur (26) par un circuit de référence (41) qui génère une telle consigne en fonction d'une image d'une grandeur électrique représentative du flux lumineux de la lampe halogène produite par un circuit (35) pour générer une image d'une grandeur électrique représentative du flux lumineux de la lampe halogène (11).

8. Dispositif selon la revendication 7, **caractérisé en ce que** les moyens de régulation de flux (41) qui génèrent une consigne de régulation d'une grandeur électrique comme la tension aux bornes de la lampe halogène comportent un circuit (29) générateur d'une tension de référence Vref qui est une fonction déterminée de la tension instantanée d'alimentation Val prélevée au plus près de la lampe halogène (11).

9. Dispositif selon la revendication 7, **caractérisé en ce que** les moyens de régulation de flux (41) qui génèrent une consigne de régulation d'une grandeur électrique comme la tension aux bornes de la lampe halogène comportent un circuit (31) générateur d'une tension de référence pour réaliser au moins une fonction secondaire.

10. Dispositif selon la revendication 9, **caractérisé en ce que** les fonctions secondaires assurées sont déterminées parmi les fonctions « AFS » d'adaptation de l'éclairage avant du véhicule.

11. Dispositif selon la revendication 10, **caractérisé en ce que** les fonctions d'adaptation de l'éclairage avant du véhicule sont sélectionnées parmi l'une des fonctions suivantes :

- commande du mode d'éclairage dynamique en code lors d'un virage ;
- commande du mode d'éclairage fixe en code lors d'un virage ;
- commande en mode d'éclairage en feu de ville ;
- commande en mode d'éclairage en feu d'autoroute ;
- commande en mode d'éclairage en feu surélevé ;
- commande en mode d'éclairage en feu de mauvais temps.

12. Dispositif selon la revendication 9, **caractérisé en ce que** les fonctions secondaires assurées sont basées sur un second mode de fonctionnement de la lampe halogène assuré par l'application à la lampe d'une tension, d'un courant et/ou d'une ondulation de courant régulés et prédéterminés.

13. Dispositif selon la revendication 7, **caractérisé en ce que** les moyens de régulation de flux (41) qui génèrent une consigne de régulation d'une grandeur électrique comme la tension aux bornes de la lampe halogène comportent un circuit (33) générateur d'une tension de référence pour tenir compte de la vitesse instantanée du véhicule.

14. Dispositif selon la revendication 7, **caractérisé en ce que** les moyens de régulation de flux (41) qui génèrent une consigne de régulation d'une grandeur électrique comme la tension aux bornes de la lampe halogène comportent un circuit générateur d'une tension de référence pour tenir compte de la température de la lampe.

15. Dispositif selon la revendication 7, **caractérisé en ce que** les moyens de régulation de flux (41) qui génèrent une consigne de régulation d'une grandeur électrique comme la tension aux bornes de la lampe halogène comportent un circuit générateur d'une tension de référence pour tenir compte du degré de vieillissement de la lampe.

16. Dispositif selon l'une quelconque au moins des revendications 7 à 15, **caractérisé en ce que** le que les moyens de régulation de flux (41) qui génèrent une consigne de régulation d'une grandeur électrique comme la tension aux bornes de la lampe halogène comporte un circuit (37) pour générer une tension de référence servant de consigne pour le circuit (26) générateur d'un signal à modulation de largeur d'impulsion PWM qui exécute une fonction f1 (), de la forme Vref = f1 (Val, Vsortie), dépendant des paramètres produits par au moins l'un des circuits (29) de mesure de la tension d'alimentation (Val), circuit (31) générateur d'une tension de référence pour fonction secondaire, circuit (33) générateur d'une tension de référence pour tenir compte de la vitesse instantanée du véhicule, générateur d'une tension de référence pour tenir compte de la température de la lampe, générateur d'une tension de référence pour tenir compte du degré de vieillissement de la lampe.

17. Dispositif selon la revendication 16, **caractérisé en ce que** l'onde produite par le circuit (26) générateur d'un signal à modulation de largeur d'impulsion PWM est transmise à l'entrée de commande d'un circuit à transistor de découpage (27) qui est par ailleurs connecté à une source d'alimentation (2) dont la tension va être découpée en synchronisme avec l'onde PWM appliquée à la première entrée du circuit à transistor de découpage (27).

18. Système d'éclairage et/ou de signalisation de véhicule, **caractérisé en ce qu'**il comprend au moins un dispositif selon l'une quelconque des revendications 1 à 17.

19. Système selon la revendication 18, **caractérisé en ce qu'**il comporte des moyens pour activer une seconde fonction d'éclairage et/ou de signalisation pour une même lampe halogène monofilament.

Figure 1

Figure 2

Tpwm

Figure 3

V1

Vc(Tx2)

consigne

Vc(Tx1)

pwm

t

t1    t2        t3    t4

Vpwm

commande

t

Tx1        Tx2

Vs

Figure 4

Val +

Vc

Tx

Tx3   Tx2            Tx1

**Office européen des brevets**

**RAPPORT DE RECHERCHE EUROPEENNE**

Numéro de la demande

EP 05 29 0198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 367 863 A (SUMITA OPTICAL GLASS) 3 décembre 2003 (2003-12-03) | 1,7,8,18 | H05B39/04 |
| Y | * alinéa [0005] - alinéa [0007] * * alinéa [0043] - alinéa [0051]; figures 6,8 * | 13-15 | |
| | ----- | | |
| Y | US 2002/047533 A1 (MIZUMOTO KATSUYOSHI ET AL) 25 avril 2002 (2002-04-25) * alinéa [0039] - alinéa [0041] * * alinéa [0057] - alinéa [0059] * * alinéa [0074] - alinéa [0077] * | 13-15 | |
| | ----- | | |
| A | EP 0 401 911 A (PHILIPS NV) 12 décembre 1990 (1990-12-12) * page 2, ligne 14 - ligne 31; figures 1,2 * | 1 | |
| | ----- | | |
| A | EP 0 735 801 A (VALEO ELECTRONIQUE) 2 octobre 1996 (1996-10-02) * le document en entier * ----- | 1-19 | |

**DOMAINES TECHNIQUES RECHERCHES (Int.Cl.7)**

H05B

Le présent rapport a été établi pour toutes les revendications

| Lieu de la recherche | Date d'achèvement de la recherche | Examinateur |
|---|---|---|
| Munich | 31 mai 2005 | Henderson, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 0198

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-05-2005

| Document brevet cité au rapport de recherche | | Date de publication | Membre(s) de la famille de brevet(s) | | Date de publication |
|---|---|---|---|---|---|
| EP 1367863 | A | 03-12-2003 | JP | 2004030927 A | 29-01-2004 |
| | | | CN | 1462164 A | 17-12-2003 |
| | | | EP | 1367863 A2 | 03-12-2003 |
| | | | US | 2004036422 A1 | 26-02-2004 |
| US 2002047533 | A1 | 25-04-2002 | JP | 2002087151 A | 26-03-2002 |
| | | | DE | 10145973 A1 | 11-04-2002 |
| EP 0401911 | A | 12-12-1990 | AT | 111674 T | 15-09-1994 |
| | | | DE | 69012433 D1 | 20-10-1994 |
| | | | EP | 0401911 A1 | 12-12-1990 |
| | | | JP | 2983038 B2 | 29-11-1999 |
| | | | JP | 3025896 A | 04-02-1991 |
| | | | US | 5053680 A | 01-10-1991 |
| EP 0735801 | A | 02-10-1996 | FR | 2732540 A1 | 04-10-1996 |
| | | | DE | 69614743 D1 | 04-10-2001 |
| | | | DE | 69614743 T2 | 27-06-2002 |
| | | | EP | 0735801 A1 | 02-10-1996 |
| | | | ES | 2161989 T3 | 16-12-2001 |

EPO FORM P0460

Pour tout renseignement concernant cette annexe : voir Journal Officiel de l'Office européen des brevets, No.12/82